# EUROPÄISCHE PATENTANMELDUNG

(11) **EP 1 063 451 A1**
(43) Veröffentlichungstag der Anmeldung: **27.12.2000**
(21) Anmeldenummer: 00111762.1
(22) Anmeldetag: 03.06.2000
(51) Int. Cl.: F16H 61/02

(54) **Verfahren und Steuereinrichtung zur Ermittlung von Schaltzeitpunkten für die Gangumschaltung bei einem automatisierten Hand-Schaltgetriebe**

(30) Priorität: 24.06.1999 DE 19929087
(71) Anmelder: Volkswagen Aktiengesellschaft, 38436 Wolfsburg (DE)
(72) Erfinder: Carl, Frank, 38106 Braunschweig (DE); Hofmann, Rainer, 38106 Braunschweig (DE); Christmann, Ralf, 38518 Gifhorn (DE); Krause, Heinrich, 38477 Jembke (DE); Kruse, Georg, 38518 Gifhorn (DE); Nicke, Dirk, 38106 Braunschweig (DE); Marx, Volker, 29379 Wittingen (DE); Schamscha, Axel, 38458 Velpke (DE)

(57) **Zusammenfassung**

Die Erfindung betrifft ein Verfahren bzw. eine Steuereinrichtung (1) zur Ermittlung von Schaltzeitpunkten für die Gangumschaltung bei einem automatisierten Hand-Schaltgetriebe (2) für ein Kraftfahrzeug, wobei das automatisierte Hand-Schaltgetriebe (2) auch als automatisches Schaltgetriebe einsetzbar ist, in diesem Betriebszustand die Fahrzeuggeschwindigkeit des Kraftfahrzeuges ermittelt wird und in Abhängigkeit der Fahrzeuggeschwindigkeit die Steuerung der Schaltzeitpunkte für die jeweilige Gangumschaltung erfolgt.

"Pendelschaltungen" werden dadurch vermieden, daß die Fahrzeuggeschwindigkeit über die entsprechenden Raddrehzahlen der sich an einer Achse (9) gegenüberliegenden Räder (10a) und (10b) ermittelt wird, nämlich die Drehzahl des ersten Rades (10a) ermittelt wird, die Drehzahl des - dem ersten Rad (10a) gegenüber angeordneten - zweiten Rades (10b) ermittelt wird, aus den Drehzahlen des ersten und zweiten Rades (10a) und (10b) ein Drehzahl-Mittelwert gebildet wird und auf der Basis dieses Drehzahl-Mittelwertes die Fahrzeuggeschwindigkeit bestimmt wird.

## Beschreibung

Die Erfindung betrifft ein Verfahren zur Ermittlung von Schaltzeitpunkten für die Gangumschaltung bei einem automatisierten Hand-Schaltgetriebe für ein Kraftfahrzeug, wobei das automatisierte Hand-Schaltgetriebe auch als automatisches Schaltgetriebe einsetzbar ist, in diesem Betriebszustand die Fahrzeuggeschwindigkeit des Kraftfahrzeuges ermittelt wird und in Abhängigkeit der Fahrzeuggeschwindigkeit die Steuerung der Schaltzeitpunkte für die jeweilige Gangumschaltung erfolgt. Weiterhin betrifft die Erfindung eine Steuereinrichtung zur Ermittlung von Schaltzeitpunkten für die Gangumstellung bei einem automatisierten Hand-Schaltgetriebe für ein Kraftfahrzeug, insbesondere arbeitend nach dem oben genannten Verfahren, mit einem Steuergerät, einem automatisierten Hand-Schaltgetriebe, das zusätzlich auch als automatisches Schaltgetriebe einsetzbar ist, wobei mindestens ein Sensor zur Ermittlung der Fahrzeuggeschwindigkeit vorgesehen ist und mit Hilfe des Steuergerätes in Abhängigkeit der Fahrzeuggeschwindigkeit im Betriebszustand "automatisches Schaltgetriebe" die Schaltzeitpunkte für die jeweilige Gangumschaltung steuerbar sind.

Im Stand der Technik sind konventionelle automatische Schaltgetriebe bekannt, bei denen u.a. die Fahrzeuggeschwindigkeit zur Steuerung der Schaltzeitpunkte des Getriebes genutzt wird. Hierbei wird die Fahrzeuggeschwindigkeit erfaßt, vorzugsweise durch einen im Bereich der Getriebeabtriebswelle angeordneten Sensor, der im Bereich zwischen dem Getriebe und dem Differentialgetriebe bei einem Kraftfahrzeug angeordnet ist. So ist beispielsweise aus der DE-A-36 13 332 eine hydraulische Steuereinrichtung für automatisch zu schaltende Fahrzeug-Getriebe bekannt, die Schaltventile aufweist, mit deren Hilfe Schaltkupplungen mit einem entsprechenden Arbeitsdruck beaufschlagt werden, wobei die Schaltpunkte der Schaltventile und der Arbeitsdruck in Abhängigkeit von der Motorlast, insbesondere der Gashebelstellung, und der Fahrzeuggeschwindigkeit festgelegt sind und als Steuerdrücke den Schaltventilen zugeführt werden.

Weiterhin ist im Stand der Technik eine Steuereinrichtung zum Schalten von Stufenwechselgetrieben bekannt (DE-A-36 08 208), wobei zum selbsttätigen Schalten von Stufenwechselgetrieben eine elektronische Steuereinheit, vorzugsweise ein elektronisches Steuergerät, zur Ermittlung der Schaltpunkte für die Gangumschaltung vorgesehen ist. Weiterhin ist ein Schalthebel für die Park- und/oder Neutralstellung (N) sowie die Vorwärts- (D) und Rückwärtsfahrt (R) vorgesehen. Die Schaltzeitpunkte werden in Abhängigkeit von der Fahrzeuggeschwindigkeit und der Momentanforderung, nämlich der Gashebelstellung sowie der Beschleunigung festgelegt, wobei diese wiederum aus der Drehzahl der Getriebeabtriebswelle von der elektronischen Steuereinheit errechnet wird.

Automatisierte Hand-Schaltgetriebe für Kraftfahrzeuge sind nun derartig konstruiert, daß hier ein Betriebszustand realisiert werden kann, so daß das automatisierte Hand-Schaltgetriebe auch als ein automatisches Schaltgetriebe einsetzbar ist. Da das automatisierte Hand-Schaltgetriebe grundsätzlich vom Fahrer manuell bedient wird, benötigen derartige automatisierte Hand-Schaltgetriebe grundsätzlich keine Sensoren, die die Drehzahl der Getriebeabtriebswelle erfassen. Soll nun ein derartiges automatisiertes Hand-Schaltgetriebe nunmehr auch als "automatisches Schaltgetriebe" eingesetzt werden, so benötigt die Steuereinrichtung bzw. das Steuergerät die Information über die exakte Fahrgeschwindigkeit, damit die Schaltzeitpunkte für die Gangumschaltung entsprechend ermittelt und dann auch die Gangumschaltung entsprechend durchgeführt werden kann. Im allgemeinen ist zwischen dem im Kraftfahrzeug angeordneten Getriebe und dem Differentialgetriebe kein Bauraum mehr vorhanden, um hier einen Drehzahl-Sensor an der Getriebeabtriebswelle anzuordnen. Außerdem müßte in sehr arbeitsaufwendigem und kostenaufwendigem Maße hierzu die Dimensionierung bzw. Ausbildung des Getriebegehäuses entsprechend geändert werden. Zwar könnte das Steuergerät, wenn das automatisierte Hand-Schaltgetriebe als automatisches Schaltgetriebe eingesetzt wird, das entsprechende Raddrehzahlsensorsignal vom ABS-System erhalten, jedoch haben nicht alle Kraftfahrzeuge serienmäßig ein ABS-System. Insbesondere ist hierbei problematisch, daß die ermittelte Fahrgeschwindigkeit nur bei der Geradeausfahrt des Kraftfahrzeuges mit der wirklichen, exakten Fahrzeuggeschwindigkeit übereinstimmt.

Durchfährt das Kraftfahrzeug beispielsweise eine enge Kurve und/oder einen engen Kreisverkehr im 2. Gang und befindet sich der Raddrehzahlmesser am Außenrad, sensiert dieser wegen des größeren Kurvenradius ― im Endeffekt ― eine "höhere" Fahrzeuggeschwindigkeit, als dies tatsächlich der Fall ist. Folglich schaltet das Steuergerät bzw. das Getriebesteuergerät einen Gang hoch, nämlich in den 3. Gang. Beim Verlassen der Kurve bzw. des Kreisverkehrs, wobei die Fahrzeuggeschwindigkeit im wesentlichen gleich bleibt wie innerhalb der Kurve bzw. innerhalb des Kreisverkehrs, reduziert sich nun wieder die gemessene Fahrzeuggeschwindigkeit, so daß das Steuergerät bzw. Getriebesteuergerät das Getriebe wieder in den 2. Gang schaltet. Obwohl die wirkliche Fahrzeuggeschwindigkeit konstant geblieben ist, hat eine Gangumschaltung stattgefunden, die im allgemeinen nicht erwünscht ist. Solche unerwünschten Schaltvorgänge werden "Pendelschaltungen" genannt.

Der Erfindung liegt daher die Aufgabe zugrunde, bei einem automatisierten Hand-Schaltgetriebe der eingangs genannten Art, das gleichzeitig auch als automatisches Schaltgetriebe einsetzbar ist, derart auszugestalten und weiterzubilden, daß auf kostengünstige Art und Weise "Pendelschaltungen" vermieden werden.

Die zuvor gezeigte Aufgabe ist bei dem Verfahren nun dadurch gelöst, daß die Fahrzeuggeschwindigkeit über die entsprechenden Raddrehzahlen der sich an einer Achse gegenüberliegenden Räder ermittelt wird, nämlich die Drehzahl des ersten Rades ermittelt wird, die Drehzahl des ― dem ersten Rad gegenüber angeordneten ― zweiten Rades ermittelt wird, aus den Drehzahlen des ersten und zweiten Rades ein Drehzahl-Mittelwert gebildet wird und auf der Basis dieses Drehzahl-Mittelwertes die Fahrzeuggeschwindigkeit bestimmt wird.

Für die Steuereinrichtung ist die zuvor aufgezeigt Aufgabe nun dadurch gelöst, daß ein erster Sensor zur Erfassung der Drehzahl eines ersten Rades vorgesehen ist, daß ein zweiter Sensor zur Erfassung der Drehzahl eines ― dem ersten Rad auf einer Achse gegenüberliegend angeordneten ― zweiten Rades vorgesehen ist, daß aus beiden erfaßten Drehzahlen durch das Steuergerät ein Drehzahl-Mittelwert bestimmbar ist und auf der Basis dieses Drehlzahl-Mittelwertes mit Hilfe des Steuergerätes die Fahrzeuggeschwindigkeit bestimmbar ist.

Da nunmehr die Fahrzeuggeschwindigkeit dadurch ermittelt wird, daß an zwei sich gegenüberliegenden Rädern die entsprechenden Raddrehzahlen jeweils einzeln ermittelt werden und hieraus dann ein Mittelwert, nämlich ein Drehzahl-Mittelwert gebildet wird, und auf dieser Basis dann die tatsächliche Fahrzeuggeschwindigkeit bestimmt wird, werden die oben beschriebenen "Pendelschaltungen" auf kostengünstige Art und Weise vermieden. Folglich kann ein automatisiertes Hand-Schaltgetriebe, das auch als automatisches Schaltgetriebe einsetzbar ist, genau in diesem Betriebszustand, also als "automatisches Schaltgetriebe", auch so geschaltet und betrieben werden, daß die Pendelschaltungen vermieden sind und nicht auf kostenintensive Art und Weise zwischen dem Getriebe und dem Differentialgetriebe ein separater Sensor zur Erfassung der Getriebeabtriebswelle angeordnet werden muß, indem nämlich das Getriebegehäuse auf kostenintensive Art und Weise entsprechend anders ausgebildet bzw. dimensioniert werden müßte. Der Drehzahl-Mittelwert der sich auf einer Achse gegenüberliegenden Räder ist proportional zur tatsächlichen Fahrzeuggeschwindigkeit und wird daher für die Schaltvorgänge des automatisierten Getriebes entsprechend genutzt.

Es gibt nun eine Vielzahl von Möglichkeiten, das erfindungsgemäße Verfahren bzw. die erfindungsgemäße Steuereinrichtung in vorteilhafter Weise auszugestalten und weiterzubilden. Hierfür darf zunächst auf die dem Patentanspruch 1 und dem Patentanspruch 5 nachgeordneten Patentansprüche verwiesen werden. Im einzelnen soll nun eine bevorzugte Ausführungsform der Erfindung anhand der nachfolgenden Beschreibung sowie einer Zeichnung näher erläutert werden.

In der Zeichnung zeigt:

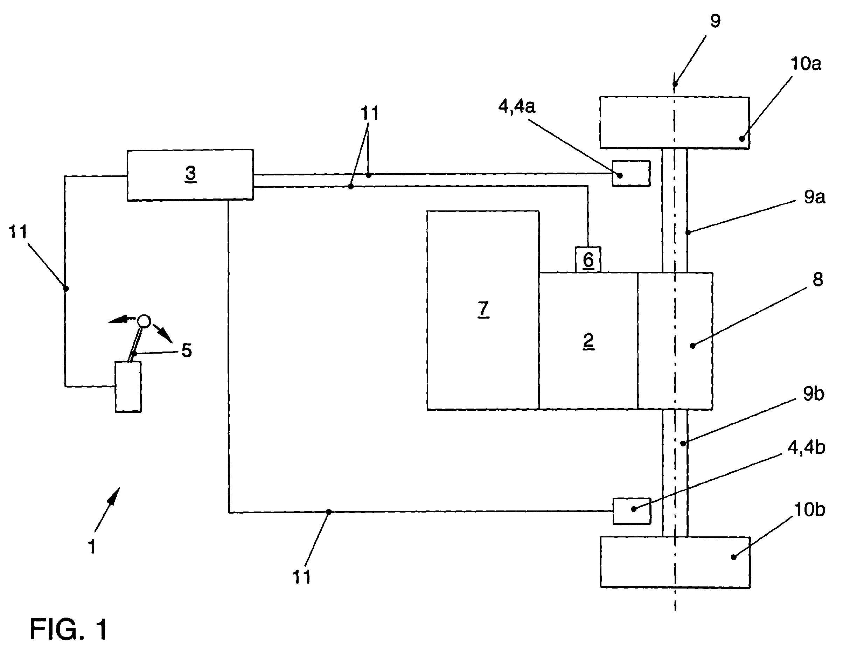

- Fig. 1: in einer schematischen Darstellung das Verfahren bzw. die Steuereinrichtung zur Ermittlung bzw. Steuerung der Schaltzeitpunkte für die Gangumstellung bei einem automatisierten Hand-Schaltgetriebe für ein Kraftfahrzeug, das als automatisches Schaltgetriebe eingesetzt wird.

Die Fig. 1 zeigt in schematischer Darstellung ein Verfahren bzw. eine Steuereinrichtung 1 zur Ermittlung von Schaltzeitpunkten für die Gangumschaltung bei einem automatisierten Hand-Schaltgetriebe 2 für ein hier nur teilweise schematisch dargestelltes, nicht näher bezeichnetes Kraftfahrzeug. Das automatisierte Hand-Schaltgetriebe 2 ist auch als automatisches Schaltgetriebe einsetzbar. Anders ausgedrückt: Das automatisierte Hand-Schaltgetriebe 2 ist als konventionelles automatisches Schaltgetriebe betreibbar. Hierzu wird in dem Betriebszustand "automatisches Schaltgetriebe" die Fahrzeuggeschwindigkeit des Kraftfahrzeuges ermittelt, wobei in Abhängigkeit der Fahrzeuggeschwindigkeit die Steuerung der Schaltzeitpunkte für die jeweilige Gangumschaltung innerhalb des Hand-Schaltgetriebes 2 erfolgt. Die Steuereinrichtung 1 weist ein Steuergerät 3 und einen Sensor 4 zur Ermittlung der Fahrzeuggeschwindigkeit auf. Mit Hilfe des Steuergerätes 3 sind in Abhängigkeit der Fahrzeuggeschwindigkeit im Betriebszustand "automatisches Schaltgetriebe" die Schaltzeitpunkte für die jeweilige Gangumschaltung im Hand-Schaltgetriebe 2 steuerbar.

Weiterhin weist die Steuereinrichtung 1 einen im Fahrgastraum angeordneten Schalthebel 5 für den Fahrer und eine im Bereich des automatisierten Hand-Schaltgetriebes 2 angeordnete Schaltvorrichtung 6 auf. Die Schaltvorrichtung 6 ist vorzugsweise als elektrohydraulische Wähl- und Schaltvorrichtung ausgeführt. Fig. 1 zeigt hier den Motor 7, der über eine nicht dargestellte Kupplung mit dem Hand-Schaltgetriebe 2 entsprechend verbunden ist, wobei sich an das Hand-Schaltgetriebe 2 ein Differentialgetriebe 8 anschließt.

Zusätzlich zeigt Fig. 1, daß der Schalthebel 5, das Steuergerät 3, der Sensor 4, die Schaltvorrichtung 6 entsprechend, insbesondere mit dem Steuergerät 3 schaltungstechnisch über Steuerleitungen 11 verbunden sind.

Vom Differentialgetriebe 8 ausgehend erstrecken sich zwei Antriebswellen 9a und 9b jeweils zu den Vorderrädern des Kraftfahrzeuges. Fig. 1 zeigt folglich die schematische Anordnung der Steuereinrichtung 1 mit den entsprechenden wesentlichen Bestandteilen zur Realisierung einschließlich der Steuerleitungen 11.

Wie bereits eingangs erläutert worden ist, ist bei einem automatisierten Hand-Schaltgetriebe 2 problematisch, wenn dieses als "automatisches Schaltgetriebe" eingesetzt wird, daß eben keine "Pendelschaltungen" auftreten sollen. Dieses Problem wird bei dem erfindungsgemäßen Verfahren dadurch vermieden, daß die Fahrzeuggeschwindigkeit über die entsprechenden Raddrehzahlen der sich an einer Achse 9 gegenüberliegenden Räder 10, hier der Vorderräder ermittelt wird, nämlich die Drehzahl des ersten Rades 10a ermittelt wird, die Drehzahl des ― dem ersten Rad 10a gegenüber angeordneten ― zweiten Rades 10b ermittelt wird und dann aus diesen Drehzahlen des ersten und zweiten Rades 10a und 10b ein Drehzahl-Mittelwert gebildet wird und auf der Basis dieses Drehzahl-Mittelwertes die Fahrzeuggeschwindigkeit bestimmt wird. Die so bestimmte Fahrzeuggeschwindigkeit entspricht im wesentlichen der tatsächlichen Fahrzeuggeschwindigkeit, so daß die "Pendelschaltungen" vermieden werden können.

Die erfindungsgemäße Steuereinrichtung 1 löst dieses Problem dadurch, daß der im Oberbegriff erwähnte Sensor 4 im wesentlichen zwei Sensoren umfaßt, nämlich einen ersten Sensor 4a zur Erfassung der Drehzahl des ersten Rades 10a, sowie einen zweiten Sensor 4b zur Erfassung der Drehzahl eines ― dem ersten Rad 10a auf einer Achse 9 gegenüberliegend angeordneten ― zweiten Rades 10b. Aus beiden erfaßten Drehzahlen der jeweiligen Räder 10a und 10b ist durch das Steuergerät 3 ein Drehzahl-Mittelwert bestimmbar, woraufhin auf der Basis dieses Drehzahl-Mittelwertes mit Hilfe des Steuergerätes 3 die Fahrzeuggeschwindigkeit bestimmbar ist, die im wesentlichen der tatsächlichen Fahrzeuggeschwindigkeit entspricht.

Obwohl ― wie Fig. 1 zeigt ― hier die Fahrzeuggeschwindigkeit aufgrund der Drehzahlmessung der beiden Vorderräder, nämlich der Räder 10a und 10b erfaßt wird, ist auch denkbar, daß die gleiche Messung bzw. das gleiche Verfahren an den Hinterrädern eines Kraftfahrzeugs durchgeführt wird. Auf der Basis der ermittelten tatsächlichen Fahrzeuggeschwindigkeit veranlaßt das Steuergerät 3 im Betriebszustand "automatisches Schaltgetriebe" eines Hand-Schaltgetriebes 2 die Steuerung der Schaltzeitpunkte für die jeweilige Gangumstellung des Getriebes 2. Hierzu können im Steuergerät 3 bestimmte Kennfelder abgespeichert sein, die die jeweiligen Schaltzeitpunkte in Abhängigkeit der jeweiligen Fahrzeuggeschwindigkeit beinhalten, so daß mit Hilfe dieser Kennfelder die Steuerung der Schaltzeitpunkt mit Hilfe der Schaltvorrichtung 6 zur Gangumstellung im Hand-Schaltgetriebe 2 veranlaßt werden kann.

Die Sensoren 4a und 4b können unterschiedlich ausgeführt sein, sind vorzugsweise aber als Induktivgeber ausgeführt. Die Realisierung der entsprechenden Schaltung auf teils elektrischer, teils elektronischer Basis sowie die Verwendung eines geeigneten Steuergerätes 3 liegt in der Hand des Durchschnittsfachmannes und kann in Abhängigkeit des jeweiligen Fahrzeugtyps unterschiedlich ausfallen.

Entscheidend ist, daß an den sich gegenüberliegenden Rädern 10a und 10b die entsprechenden Drehzahlen über die Sensoren 4a und 4b ermittelt werden, hieraus ein Mittelwert gebildet wird, aus dem sich entsprechend äquivalent auf die tatsächliche Fahrzeuggeschwindigkeit rückschließen läßt. Selbstverständlich sind hierfür Mikroprozessoren, Kennfelder sowie entsprechende andere schaltungstechnische Möglichkeiten gegeben, die hier dem Durchschnittsfachmann zur Verfügung stehen, worauf hier im folgenden auch nicht näher eingegangen werden soll.

Im Ergebnis werden mit dem erfindungsgemäßen Verfahren bzw. der erfindungsgemäßen Steuereinrichtungen die Pendelschaltungen vermieden.

### BEZUGSZEICHENLISTE

- 1: Steuereinrichtung
- 2: Hand-Schaltgetriebe
- 3: Steuergerät
- 4: Sensor
- 4a: 1. Sensor
- 4b: 2. Sensor
- 5: Schalthebel
- 6: Schaltvorrichtung
- 7: Motor
- 8: Differentialgetriebe
- 9: Achse
- 9a,b: Antriebswelle
- 10a, b: Vorderräder
- 11: Steuerleitungen

## Patentansprüche

1. Verfahren zur Ermittlung von Schaltzeitpunkten für die Gangumschaltung bei einem automatisierten Hand-Schaltgetriebe (2) für ein Kraftfahrzeug, wobei das automatisierte Hand-Schaltgetriebe (2) auch als automatisches Schaltgetriebe einsetzbar ist, in diesem Betriebszustand die Fahrzeuggeschwindigkeit des Kraftfahrzeuges ermittelt wird und in Abhängigkeit der Fahrzeuggeschwindigkeit die Steuerung der Schaltzeitpunkte für die jeweilige Gangumschaltung erfolgt, **dadurch gekennzeichnet**, daß die Fahrzeuggeschwindigkeit über die entsprechenden Raddrehzahlen der sich an einer Achse (9) gegenüberliegenden Räder (10a) und (10b) ermittelt wird, nämlich die Drehzahl des ersten Rades (10a) ermittelt wird, die Drehzahl des - dem ersten Rad (10a) gegenüber angeordneten - zweiten Rades (10b) ermittelt wird, aus den Drehzahlen des ersten und zweiten Rades (10a) und (10b) ein Drehzahl-Mittelwert gebildet wird und auf der Basis dieses Drehzahl-Mittelwertes die Fahrzeuggeschwindigkeit bestimmt wird.

2. Verfahren nach dem vorhergehenden Anspruch, **dadurch gekennzeichnet**, daß die entsprechende Drehzahlen der an der vorderen Achse (9) vorgesehenen einzelnen Vorderräder ermittelt wird.

3. Verfahren nach einem der vorhergehenden Ansprüche, **dadurch gekennzeichnet**, daß mit Hilfe eines Steuergerätes (3) aus den Drehzahlen der Räder (10a) und (10b) der Drehzahl-Mittelwert gebildet wird und das Steuergerät (3) auf der Basis dieses Drehzahl-Mittelwertes bzw. auf der Basis der hieraus ermittelten Fahrzeuggeschwindigkeit die Steuerung der Schaltzeitpunkte für die jeweilige Gangumstellung des Getriebes (2) veranlaßt.

4. Verfahren nach einem der vorhergehenden Ansprüche, **dadurch gekennzeichnet**, daß das Steuergerät (3) mit Hilfe eines im Steuergerät (3) gespeicherten bestimmten Kennfeldes in Abhängigkeit der jeweiligen Fahrzeuggeschwindigkeit die Steuerung der Schaltzeitpunkte zur Gangumstellung veranlaßt.

5. Steuereinrichtung (1) zur Ermittlung von Schaltzeitpunkten für die Gangumstellung bei einem automatisierten Hand-Schaltgetriebe (2) für ein Kraftfahrzeug, insbesondere arbeitend nach dem Verfahren gemaß der Ansprüche 1 bis 4, mit einem Steuergerät (3), einem automatisierten Hand-Schaltgetriebe (2), das zusätzlich auch als automatisches Schaltgetriebe einsetzbar ist, wobei mindestens ein Sensor (4) zur Ermittlung der Fahrzeuggeschwindigkeit vorgesehen ist und mit Hilfe des Steuergerätes (3) in Abhängigkeit der Fahrzeuggeschwindigkeit im Betriebszustand "automatisches Schaltgetriebe" die Schaltzeitpunkte für die jeweilige Gangumschaltung steuerbar sind, **dadurch gekennzeichnet**, daß ein erster Sensor (4a) zur Erfassung der Drehzahl eines ersten Rades (10a) vorgesehen ist, daß ein zweiter Sensor (4b) zur Erfassung der Drehzahl eines - dem ersten Rad (10a) auf einer Achse (9) gegenüberliegend angeordneten - zweiten Rades (10b) vorgesehen ist, daß aus beiden erfaßten Drehzahlen durch das Steuergerät (3) ein Drehzahl-Mittelwert bestimmbar ist und auf der Basis dieses Drehzahl-Mittelwertes mit Hilfe des Steuergerätes (3) die Fahrzeuggeschwindigkeit bestimmbar ist.

6. Steuereinrichtung nach Anspruch 5, **dadurch gekennzeichnet**, daß die Steuereinrichtung (1) einen Schalthebel (5) und eine im Bereich des automatisierten Hand-Schaltgetriebes (2) angeordnete Schaltvorrichtung (6) aufweist.

7. Steuereinrichtung nach Anspruch 5 oder 6, **dadurch gekennzeichnet**, daß der Schalthebel (5), die Schaltvorrichtung (6), der erste und der zweite Sensor (4a) und (4b) schaltungstechnisch mit dem Steuergerät (3) verbunden sind.

8. Steuereinrichtung nach einem der Ansprüche 5 bis 7, **dadurch gekennzeichnet**, daß der erste Sensor (4a) im Bereich des rechten Vorderrades (10a) und der zweite Sensor (4b) im Bereich des linken Vorderrades (10b) angeordnet sind.

9. Steuereinrichtung nach einem der Ansprüche 5 bis 8, **dadurch gekennzeichnet**, daß der erste und der zweite Sensor (4a) und (4b) als Induktivgeber ausgeführt sind.

10. Steuereinrichtung nach einem der Ansprüche 5 bis 9, **dadurch gekennzeichnet**, daß im Steuergerät (3) entsprechende Kennfelder gespeichert sind und in Abhängigkeit der ermittelten bzw. bestimmten Fahrzeuggeschwindigkeit durch das Steuergerät (3) die Schaltzeitpunkte bestimmbar und über die Schaltvorrichtung (6) die jeweilige Gangumstellung im Getriebe (2) realisierbar ist.
